# EUROPEAN PATENT APPLICATION

(11) **EP 4 830 986 A1**
(43) Date of publication of application: **28.10.2026**
(21) Application number: 25853418.9
(22) Date of filing: 17.03.2025
(51) Int. Cl.: B60L 58/26

(54) **THERMAL MANAGEMENT METHOD AND APPARATUS FOR VEHICLE DURING CHARGING, AND DEVICE**

(30) Priority: 14.08.2024 CN 202411115051
(71) Applicant: Chery Automobile Co., Ltd., Wuhu, Anhui 241006 (CN)
(72) Inventor: MU, Hailin, Wuhu, Anhui 241006 (CN); HUANG, Bo, Wuhu, Anhui 241006 (CN); LU, Lei, Wuhu, Anhui 241006 (CN); QI, Zhongmeng, Wuhu, Anhui 241006 (CN); LUO, Zhangxiang, Wuhu, Anhui 241006 (CN)
(74) Representative: Adamson Jones
(86) International application number: PCT/CN2025/082945
(87) International publication number: WO 2026/036712

(57) **Abstract**

A thermal management method for a vehicle (120) during charging, comprising: in the case where a charging connector of a charging station (110) is connected to a target vehicle, controlling the target vehicle to turn off a vehicle thermal management function (210); acquiring battery temperature information of a battery of the target vehicle (220); and in the case where the battery temperature information indicates that the battery has a cooling demand, controlling the charging connector to supply a coolant to the battery so as to cool the battery (230). The method can adaptively improve the cooling effect on the battery during charging, and reduce the impact of heat generated during charging on the service life of the battery. In addition, also disclosed are an apparatus and a device.

## Description

The present disclosure claims priority to Chinese Patent Application No. 202411115051.9, filed on August 14, 2024, and entitled "THERMAL MANAGEMENT METHOD AND APPARATUS FOR VEHICLE DURING CHARGING PROCESS, AND DEVICE", the entire content of which is incorporated herein by reference.

### TECHNICAL FIELD

The present disclosure relates to the field of charging stations, and particularly to a thermal management method and apparatus for a vehicle during a charging process, and a device.

### BACKGROUND

In the rapidly evolving electric vehicle industry today, the fast-charging function has become a crucial technology, significantly enhancing the practicality and appeal of electric vehicles. This function typically relies on high-power charging stations to achieve rapid charging of the electric vehicles.

During a fast-charging process of a vehicle battery, inputting high-power electricity causes the battery to generate a large amount of heat, which may reduce the charging efficiency, accelerate aging of the battery, and affect the lifespan and the performance of the battery. In the related art, to address the high heat problem of the vehicle battery during a fast-charging process, a liquid-cooled cable is applied to a station with a fast-charging function to reduce the heat generated during the fast-charging process.

However, coolant conduits in the existing liquid-cooled cable supply a coolant concurrently with a power supply process of a current-carrying conduit in the cable, and the supply method is relatively limited.

### SUMMARY

The embodiments of the present disclosure provide a thermal management method and apparatus for a vehicle during a charging process, and a device, technical solutions of which are as follows.

In an aspect, a thermal management method for a vehicle during a charging process is provided. The method is performed by a charging station, and includes: controlling, in response to a charging connector of the charging station being connected to a target vehicle, the target vehicle to disable a vehicle thermal management function, where the vehicle thermal management function is a functional mode in which the target vehicle performs thermal management over the target vehicle; obtaining battery temperature information of a battery of the target vehicle; and controlling, in response to the battery temperature information indicating that the battery has a cooling demand, the charging connector to supply a coolant to the battery to cool the battery.

In another aspect, thermal management apparatus for a vehicle during a charging process is provided, which includes: a first control module, configured to control, in response to a charging connector of the charging station being connected to a target vehicle, a target vehicle to disable a vehicle thermal management function, where the vehicle thermal management function is a functional mode in which the target vehicle performs thermal management over the target vehicle; an acquisition module configured to: acquire battery temperature information of a battery of the target vehicle; and a second control module, configured to control, in response to the battery temperature information indicating that the battery has a cooling demand, the charging connector to supply a coolant to the battery to cool the battery.

In some optional embodiments, the second control module is further configured to: control, in response to the battery temperature information reaching a predetermined temperature threshold, the charging connector to supply the coolant to the battery to cool the battery.

In some optional embodiments, the second control module is further configured to: determine, in response to the battery temperature information reaching the predetermined temperature threshold, flow rate control information matching the battery temperature information, where the flow rate control information is used to control a flow rate of the coolant; and control, based on the flow rate control information, the charging connector to supply the coolant to the battery to cool the battery.

In some optional embodiments, the apparatus further includes: a sending module, configured to: send, in response to detecting that the charging connector being connected to the target vehicle, a permission confirmation request to the target vehicle, where the permission confirmation request is used to request confirmation of a thermal management permission of the charging station over the target vehicle. The first control module is further configured to: control, in response to receiving a request confirmation message responding to the permission confirmation request from the target vehicle, the target vehicle to disable the vehicle thermal management function, where the request confirmation message is a message fed back by the target vehicle in response to confirming that the target vehicle supports the thermal management performed by the charging station over the battery.

In some optional embodiments, the sending module is further configured to: send a thermal management disable request to the target vehicle, where the thermal management disable request is used to request the target vehicle to disable the vehicle thermal management function. The apparatus further includes: a receiving module, configured to: receive the disable confirmation message from the target vehicle, where the disable confirmation message is used to indicate that the vehicle disables the thermal management function.

In some optional embodiments, the apparatus further includes: a detection module configured to detect a state of the battery. The sending module is further configured to: send, in response to the state satisfying a specified state requirement, an unlock instruction to the target vehicle, where the unlock instruction is used to instruct release of the thermal management over the target vehicle, and the target vehicle is configured to detect a temperature of the battery in response to receiving the unlock instruction, and enable the vehicle thermal management function based on the detected temperature.

In some optional embodiments, the sending module is further configured to: send, in response to the state indicating that the battery is in a fully charged state, the unlock instruction to the target vehicle; or send, in response to the state indicating that the temperature of the battery satisfies a thermal management strategy for the target vehicle, the unlock instruction to the target vehicle; or send, in response to detecting disconnection from the battery, the unlock instruction to the target vehicle.

In some optional embodiments, the charging station is connected to the target vehicle via a charging cable and the charging connector, coolant conduits are arranged in the charging cable and the charging connector, and the coolant is configured to be supplied to the target vehicle via the coolant conduits. The coolant conduits include an inlet conduit and an outlet conduit, where the inlet conduit is configured to supply the coolant to the battery, and the outlet conduit is configured to return the coolant to the charging station, so as to form a loop. The inlet conduit is arranged at a first position in the charging cable, and the outlet conduit is arranged at a second position in the charging cable. In a case where the charging cable includes one inlet conduit and one outlet conduit, the first position and the second position are adjacent to a current-carrying conduit in the charging cable; or in a case where the charging cable includes one inlet conduit and a plurality of outlet conduits, a distance between the first position and the current-carrying conduit is greater than a distance between the second position and the current-carrying conduit.

In another aspect, a charging station is provided, which includes a charging connector, a processor, and a memory storing at least one program. The process, when loading and running the at least one program, is caused to perform the thermal management method for the vehicle during the charging process described in any of the above embodiments of the present disclosure.

In another aspect, a computer-readable storage medium is provided, in which at least one instruction, at least one program, a code set, or an instruction set is stored. The at least one instruction, the at least one program, the code set, or the instruction set is loaded and run by a processor to perform the thermal management method for the vehicle during the charging process described in any of the above embodiments of the present disclosure.

On the other hand, a computer program product or a computer program is provided, which includes computer instructions stored in a computer-readable storage medium. A processor of the computer device reads the computer instructions from the computer-readable storage medium, and runs the computer instructions, to cause the computer device to perform the thermal management method for the vehicle during the charging process described in any of the above embodiments.

The technical solution provided in the present disclosure at least includes the following beneficial effects.

During the charging process of the target vehicle via the charging station, the charging station controls the target vehicle to disable the thermal management function of the target vehicle, so as to take over the thermal management of the target vehicle during the charging process. During the thermal management of the target vehicle, in the case where the temperature of the battery indicates the target vehicle has a cooling demand, the charging station controls the charging connector to supply the coolant to the battery, thereby cooling the battery during the charging process. In this way, a dynamic control of supplying the coolant to the battery based on the battery temperature via highly integrated functional modules can be achieved, thereby adaptively improving the cooling effect on the battery during the charging process, and reducing the impact of heat generated during the charging process on the service life of the battery. Meanwhile, since the generation of thermal energy during the charging process is reduced, the method can further contribute to energy conservation and emission reduction.

### BRIEF DESCRIPTION OF DRAWINGS

For clearer descriptions of the technical solutions in embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative effort.
FIG. 1 is a structural block diagram of a charging system according to some embodiments of the present disclosure;
FIG. 2 is a flowchart of a thermal management method for a vehicle during a charging process according to some embodiments of the present disclosure;
FIG. 3 is a flowchart of a thermal management method for a vehicle during charging according to some embodiments of the present disclosure;
FIG. 4 is a flowchart of a process for cooling a vehicle during a charging process by a charging station according to some embodiments of the present disclosure;
FIG. 5 is a schematic diagram of a cooling loop according to some embodiments of the present disclosure;
FIG. 6 is a schematic cross-sectional view of a charging cable according to some embodiments of the present disclosure;
FIG. 7 is a schematic cross-sectional view of a charging cable according to some embodiments of the present disclosure;
FIG. 8 is a block diagram of a structure of a thermal management apparatus for a vehicle during a charging process, according to some embodiments of the present disclosure;
FIG. 9 is a block diagram of a structure of a thermal management apparatus for a vehicle during a charging process, according to some embodiments of the present disclosure; and
FIG. 10 is a block diagram of a structure of a charging station according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings.

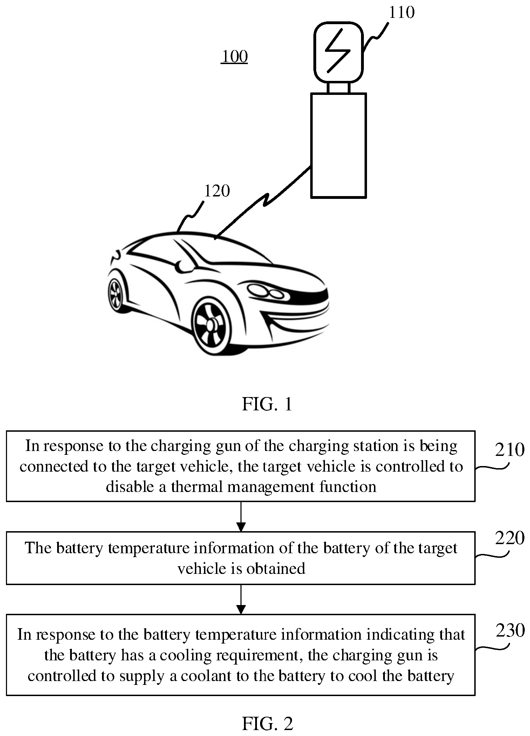

FIG. 1 illustrates a structural block diagram of a charging system according to some embodiments of the present disclosure. The charging system 100 includes a charging station 110 and a vehicle 120.

In the case where the vehicle 120 needs to be charged, the charging station 110 is connected to the vehicle 120 via a charging cable and a charging connector. During the charging process, the charging station 110 supplies power to the battery of the vehicle 120 to charge the vehicle.

In some embodiments of the present disclosure, the charging station 110 includes a processor and a memory, where at least one program is stored in the memory and is loaded and run by the processor to perform a thermal management method for a vehicle during a charging process provided in the embodiments of the present disclosure.

In some embodiments, the charging station 110 establishes a communication connection with the vehicle 120. Optionally, the communication connection may be implemented as a wired connection, or alternatively, be implemented as a wireless connection, which is not limited in the present disclosure.

Exemplarily, the thermal management method for the vehicle during the charging process provided in the present disclosure is described by taking the method performed by a charging station as an example. As shown in FIG. 2, the method includes the following steps 210 to 230.

In step 210: in response to the charging connector of the charging station being connected to the target vehicle, the target vehicle is controlled to disable a thermal management function thereof.

Exemplarily, in the case where the charging connector of the charging station and the charging port of the target vehicle establish a physical connection therebetween and the connection is confirmed to be a normal connection, it is determined that the charging connector of the charging station is connected to the target vehicle.

Optionally, the aforementioned target vehicle may be implemented as an electric vehicle (EV), a hybrid vehicle, a plug-in hybrid electric vehicle (PHEV), a range-extended electric vehicle (REEV), a fuel cell electric vehicle (FCEV), a mild hybrid vehicle (MHV), etc., which are not limited in the present disclosure.

In some embodiments of the present disclosure, the target vehicle provides a vehicle thermal management function, which is a functional mode in which the target vehicle performs thermal management on the target vehicle, that is, the target vehicle enables the vehicle thermal management function to perform thermal management on the battery thereof.

In some embodiments, the vehicle thermal management function may be implemented as a functional module of an on-board terminal of the target vehicle.

In some embodiments, in the case where the charging connector of the charging station is connected to the target vehicle, the charging station sends a thermal management disable request to the target vehicle, where the thermal management disable request is used to request the target vehicle to disable the thermal management function of the target vehicle. Then, the charging station receives a disable confirmation message from the target vehicle, where the disable confirmation message indicates that the target vehicle disables its thermal management function.

Exemplarily, in the case where the target vehicle receives the thermal management disable request sent by the charging station, the target vehicle disables the thermal management function thereof based on the thermal management disable request and sends a disable confirmation message to the charging station.

In some embodiments, in the case where the target vehicle receives the thermal management disable request sent by the charging station, the target vehicle detects a state of the thermal management function thereof. In response to detecting that the thermal management function is enabled, the target vehicle disables the thermal management function thereof based on the thermal management disable request and sends a disable confirmation message to the charging station. In response to detecting that the thermal management function is disabled, the target vehicle directly sends a disable confirmation message to the charging station.

Optionally, in the case where the target vehicle receives the thermal management disable request sent by the charging station, the target vehicle detects the temperature of the battery. In response to the temperature of the battery reaching a first temperature threshold, the target vehicle disables the vehicle thermal management function based on the thermal management disable request and sends a disable confirmation message to the charging station. Exemplarily, in response to the temperature of the battery not reaching the first temperature threshold, the target vehicle maintains the vehicle thermal management function enabled and sends a management rejection message to the charging station. The management rejection message is used to indicate that the target vehicle does not disable the vehicle thermal management function and rejects the thermal management performed by the charging station over the target vehicle.

Optionally, in the case where the target vehicle receives a thermal management disable request sent by the charging station, the function disable confirmation message is displayed via a display of the on-board terminal. In response to receiving a confirmation operation performed by a user directed to the function disable confirmation message, the vehicle thermal management function is disabled based on the confirmation operation, and a disable confirmation message is sent to the charging station. In response to receiving a rejection operation performed by user directed to the function disable confirmation message, a management rejection message is sent to the charging station based on the rejection operation.

Optionally, in the case where the target vehicle receives the thermal management disable request sent by the charging station, the target vehicle detects a charging mode of the battery. In response to detecting that the battery charging mode is a fast-charging mode, the target vehicle disables the vehicle thermal management function based on the thermal management disable request and sends a disable confirmation message to the charging station. In response to detecting that the battery charging mode is a standard charging mode and/or a slow charging mode, the target vehicle maintains the vehicle thermal management function enabled and sends a management rejection message to the charging station.

In step 220: the battery temperature information of the battery of the target vehicle is obtained.

In the embodiments of the present disclosure, the battery temperature information is used to indicate the temperature condition of the battery during the charging process via the charging station.

In some embodiments, the charging station sends a temperature acquisition message to the target vehicle. Upon receiving the temperature acquisition message sent by the charging station, the target vehicle detects the temperature of the battery based on the temperature acquisition message, generates battery temperature information based on the detection result, and sends the battery temperature information to the charging station.

In some embodiments, the target vehicle detects the temperature of the battery by invoking a temperature sensor.

Optionally, the battery temperature includes at least one of: a cell temperature, a battery module temperature, a battery pack temperature, a battery surface temperature, a connection point temperature, a battery ambient temperature, and a system coolant temperature.

The cell temperature is used to indicate the temperature of a single battery cell and/or battery unit inside the battery; in the case where the battery is a battery module composed of a plurality of battery cells, the temperature of the battery module is used to indicate the average temperature of the entire module and/or the temperature at a specific location within the module; the battery pack temperature is used to indicate the average temperature of the entire battery system; the battery surface temperature is used to indicate the temperature of a housing or a surface of the battery; the connection point temperature is used to indicate the temperature of a connection point between battery cells inside the battery and/or a connection point between a battery cell and an external circuit; the temperature of the battery ambient is used to indicate the external environmental temperature where the battery is arranged; and the system coolant temperature is used to indicate the temperature of a coolant in the battery system.

In step 230: in response to the battery temperature information indicating that the battery has a cooling demand, the charging connector is controlled to supply a coolant to the battery to cool the battery.

Exemplarily, the charging station determines whether the battery has a cooling demand based on the battery temperature information. In a case where the battery has a cooling demand, the charging station controls the charging connector to supply the coolant to the battery to cool the battery.

Optionally, the determination on the cooling demand may be implemented as at least one of the following methods.

According to a first method, it is determined whether the battery has a cooling demand based on a predetermined temperature threshold.

Exemplarily, in the case where the battery temperature information reaches the predetermined temperature threshold, it is determined that the battery has a cooling demand. The charging connector is then controlled to supply the coolant to the battery to cool the battery.

In some embodiments, the predetermined temperature threshold may be a predetermined fixed value; and in some other embodiments, the predetermined temperature threshold may be customized by the user via the on-board terminal and/or the charging station, which is not limited in the present disclosure.

In some embodiments, in the case where the battery temperature information reaches the predetermined temperature threshold, the temperature of the battery is continuously detected. In the case where it is determined that a duration in which the battery temperature is higher than the predetermined temperature threshold reaches a predetermined duration, it is determined that the battery has a cooling demand. The charging connector is then controlled to supply the coolant to the battery to cool the battery.

That is, by setting a temperature threshold to determine whether the charging station needs to supply the coolant to the battery, the cooling control during the charging process is optimized to ensure that the battery maintains a suitable temperature during a high-power charging process, thereby improving the charging speed. Meanwhile, in the case where the temperature is low or the charging power is small, the system can reduce a circulation volume of the coolant, thereby reducing energy consumption.

According to a second method, it is determined whether the battery has a cooling demand based on a variation condition of battery temperature.

In some embodiments, the battery temperature information represents the temperature variation of the battery over a predetermined time period. Exemplarily, in the case where the battery temperature information indicates a continuous increase in the battery temperature, it is determined that the battery has a cooling demand. The charging connector is then controlled to supply the coolant to the battery to cool the battery.

Optionally, the duration of the predetermined time period may be a predetermined fixed value; alternatively, the duration of the predetermined time period may be customized by the user via the on-board terminal and/or the charging station, which is not limited in the present disclosure.

In some embodiments, the charging station is capable of controlling a flow rate of the coolant. Exemplarily, in the case where the battery temperature information reaches the predetermined temperature threshold, flow rate control information matching the battery temperature information is determined. The flow rate control information is used to control the flow rate of the coolant, and the charging connector is controlled to supply the coolant to the battery based on the flow rate control information, so as to cool the battery. In some embodiments, the flow rate of the coolant is positively correlated with the battery temperature.

In some embodiments, in the case where the battery temperature information is within a first temperature range, the charging connector is controlled to supply the coolant at a first flow rate. In the case where the battery temperature information is within a second temperature range, the charging connector is controlled to supply the coolant output at a second flow rate. The first temperature range is smaller than the second temperature range, and the first flow rate is smaller than the second flow rate.

In some other embodiments, in the case where the battery temperature information represents a temperature variation of the battery within a predetermined time period, a temperature difference of the battery temperature within the predetermined time period is determined based on the battery temperature information, and flow rate control information that matches the temperature difference is determined based on the temperature difference. The charging connector is controlled to supply the coolant to the battery based on the flow rate control information, so as to cool the battery.

In some embodiments, in the case where a first temperature difference reaches a first temperature difference threshold, the charging connector is controlled to supply the coolant at a third flow rate. In the case where the battery temperature information reaches a second temperature difference threshold, the charging connector is controlled to supply the coolant at a fourth flow rate. The first temperature difference threshold is smaller than the second temperature difference threshold, and the third flow rate is smaller than the fourth flow rate.

That is, in the process of supplying the coolant to the battery, by dynamically controlling the flow rate of the coolant based on the temperature of the battery, the battery temperature can be maintained within an optimal operating range (for example, ranging from 25°C to 40°C), thereby significantly improving the charging efficiency of the battery, slowing down the aging rate of the battery, and extending the cycle life of the battery. Meanwhile, in a low-temperature environment or in the case where the charging load of the battery is low, reducing the flow rate of the coolant can reduce the energy consumption of the cooling system of the charging station.

In some embodiments, the charging station controls the charging connector to directly supply the coolant to the battery. That is, the coolant supplied by the charging connector to the target vehicle is directly guided to a conduit inside the battery, so as to transfer the heat generated by the battery during the charging process to the coolant, thereby reducing the temperature of the battery.

In some other embodiments, the charging station controls the charging connector to supply the coolant to the cooling system of the battery, and controls the coolant via the cooling system to cool the battery. The cooling system of the battery is a system of the target vehicle used for cooling the battery. In the embodiments of the present disclosure, the cooling system is a water-cooled cooling system. That is, the coolant is controlled to flow in the conduits inside the battery, so as to transfer the heat generated by the battery during the charging process to the coolant, thereby reducing the temperature of the battery.

In summary, during the charging process of the target vehicle via the charging station, the charging station controls the target vehicle to disable the thermal management function of the target vehicle, so as to take over the thermal management of the target vehicle during the charging process. During the thermal management of the target vehicle, in the case where the temperature of the battery indicates the target vehicle has a cooling demand, the charging station controls the charging connector to supply the coolant to the battery, thereby cooling the battery during the charging process. In this way, a dynamic control of supplying the coolant to the battery based on the battery temperature via highly integrated functional modules can be achieved, thereby adaptively improving the cooling effect on the battery during the charging process, and reducing the impact of heat generated during the charging process on the service life of the battery. Meanwhile, since the generation of thermal energy during the charging process is reduced, the method can further contribute to energy conservation and emission reduction.

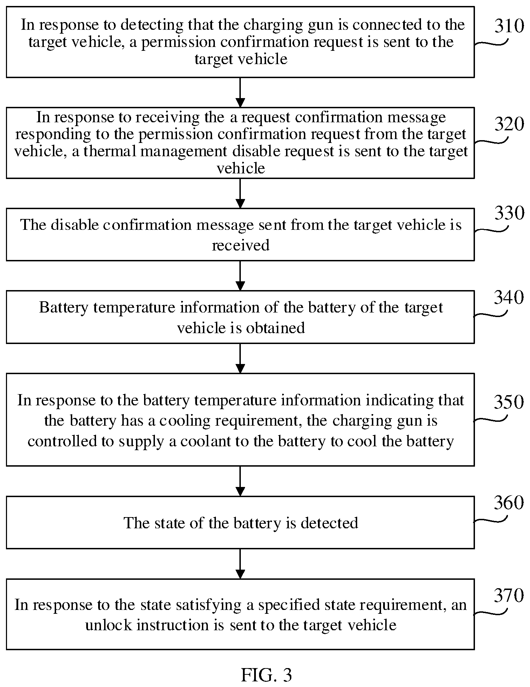

With reference to FIG. 3, which illustrates a flowchart of a thermal management method for a vehicle during a charging process provided by an exemplary embodiment of the present disclosure. In this exemplary embodiment, an information interaction process between the charging station and the target vehicle is schematically described. The method includes steps 310 to 370.

In step 310: in response to detecting that the charging connector is connected to the target vehicle, a permission confirmation request is sent to the target vehicle.

The permission confirmation request is used to request confirmation of a thermal management permission of the charging station over the target vehicle.

In some embodiments of the present disclosure, the permission confirmation request is transmitted via a communication network between the charging station and the target vehicle. Optionally, the communication network may be implemented as a wired network, or alternatively, may be implemented as a wireless network.

In some embodiments, Vehicle-to-Infrastructure (V2I) communication of an internet of vehicles is established between the charging station and the target vehicle via a wireless communication technology. Optionally, the charging station accesses a mobile hotspot (Wireless Fidelity, Wi-Fi) of the vehicle and sends the permission confirmation request to the target vehicle via the Wi-Fi of the vehicle. Alternatively, the charging station establishes a Bluetooth connection with the target vehicle and sends the permission confirmation request to the target vehicle via Bluetooth.

In some other embodiments, the charging station is connected to the Internet via a communication network (such as 4G and 5G networks), thereby connecting to the cloud server. The target vehicle is also connected to the Internet via the communication network, thereby connecting to the cloud server. The charging station sends the permission confirmation request to the cloud server, which in turn sends the permission confirmation request to the target vehicle.

In some other embodiments, a data transmission line is provided in a charging cable of the charging station, and the charging station sends the permission confirmation request to the target vehicle via the data transmission line.

In step 320, in response to receiving a request confirmation message responding to the permission confirmation request from the target vehicle, a thermal management disable request is sent to the target vehicle.

Exemplarily, the request confirmation message is a message fed back by the target vehicle in response to confirming that the target vehicle supports the thermal management performed by the charging station over the battery.

In some embodiments, the target vehicle determines whether the charging station has the permission to perform the thermal management over the battery by confirming whether the battery of the target vehicle supports fast charging. Exemplarily, in response to the battery of the target vehicle supporting the fast-charging mode, the target vehicle sends a request confirmation message to the charging station.

In some other embodiments, in the case where the battery of the target vehicle supports the fast-charging mode, the target vehicle determines whether to send a request confirmation message to the charging station based on a battery charging mode selected by the user for the current charging process. Exemplarily, in response to the current battery charging mode being a fast-charging mode, a request confirmation message is sent to the charging station; and in response to the current battery charging mode being a standard charging mode and/or a slow charging mode, a request failure message is sent to the charging station, indicating that the charging station does not have the permission to perform the thermal management over the battery.

In some embodiments, the permission confirmation request sent by the charging station is received and processed by the Battery Management System (BMS) in the target vehicle, where the BMS is a system responsible for monitoring and managing the state and performance of the battery in the target vehicle.

In some embodiments, in the case where the permission confirmation request is processed via the BMS of the target vehicle, and when the BMS feeds back a request confirmation message responding to the permission confirmation request to the charging station, the request confirmation message may further include BMS identification information of the target vehicle and vehicle identification information of the target vehicle. The BMS identification information includes parameters and data that are used to uniquely identify and manage the BMS, such as a BMS ID. The vehicle identification information is used to indicate information that can uniquely identify the target vehicle, such as a Vehicle Identification Number (VIN), a license plate number, and an on-board terminal ID.

Exemplarily, in the case where the charging station receives a request confirmation message, responding to the permission confirmation request, from the target vehicle, the charging station sends a thermal management disable request to the target vehicle. The thermal management disable request is used to request the target vehicle to disable the thermal management function of the vehicle. In the case where the charging station receives a request failure message, responding to the permission confirmation request, from the target vehicle, the charging station terminates the thermal management process for the target vehicle.

In some embodiments of the present disclosure, a vehicle thermal management function is provided by the target vehicle, where the vehicle thermal management function is a functional mode in which the target vehicle performs thermal management on the target vehicle, that is, the target vehicle uses the vehicle thermal management function to perform thermal management on the battery thereof.

In step 330: the disable confirmation message sent from the target vehicle is received.

In some embodiments of the present disclosure, the disable confirmation message is used to indicate that the target vehicle disables the vehicle thermal management function. Exemplarily, after the target vehicle receives a thermal management disable request sent by the charging station, the target vehicle detects the state of the vehicle thermal management function. In response to detecting that the vehicle thermal management function is enabled, the target vehicle disables the vehicle thermal management function based on the thermal management disable request and sends a disable confirmation message to the charging station. In response to detecting that the vehicle thermal management function is disabled, the target vehicle directly sends a disable confirmation message to the charging station.

Optionally, in the case where the target vehicle receives the thermal management disable request sent by the charging station, the target vehicle detects the temperature of the battery. In response to the temperature of the battery reaching a first temperature threshold, the target vehicle disables the vehicle thermal management function based on the thermal management disable request and sends a disable confirmation message to the charging station. Exemplarily, in response to the temperature of the battery not reaching the first temperature threshold, the target vehicle maintains the vehicle thermal management function enabled and sends a management rejection message to the charging station. This management rejection message indicates that the target vehicle does not disable the vehicle thermal management function and rejects the thermal management performed by the charging station over the target vehicle.

Optionally, in the case where the target vehicle receives a thermal management disable request sent by the charging station, the function disable confirmation message is displayed via a display of the on-board terminal. In response to receiving a confirmation operation performed by a user directed to the function disable confirmation message, the vehicle thermal management function is disabled based on the confirmation operation, and a disable confirmation message is sent to the charging station. In response to receiving a rejection operation performed by user directed to the function disable confirmation message, a management rejection message is sent to the charging station based on the rejection operation.

Optionally, in the case where the target vehicle receives the thermal management disable request sent by the charging station, the target vehicle detects a charging mode of the battery. In response to detecting that the battery charging mode is a fast-charging mode, the target vehicle disables the vehicle thermal management function based on the thermal management disable request and sends a disable confirmation message to the charging station. In response to detecting that the battery charging mode is a standard charging mode and/or a slow charging mode, the target vehicle maintains the vehicle thermal management function enabled and sends a management rejection message to the charging station.

In some embodiments, the thermal management disable request sent by the charging station is received and processed by the BMS in the target vehicle. Exemplarily, the BMS receives the thermal management disable request sent by the charging station and, based on the request, feeds back a disable confirmation message to the charging station.

Exemplarily, in the case where receives the disable confirmation message sent by the target vehicle, the charging station performs thermal management on the target vehicle, that is, the charging station takes over the thermal management of the battery of the target vehicle.

In step 340: battery temperature information of the battery of the target vehicle is obtained.

In some embodiments of the present disclosure, the battery temperature information is used to indicate the temperature condition of the battery during the charging process via the charging station.

In some embodiments, the charging station sends a temperature acquisition message to the target vehicle. Upon receiving the temperature acquisition message sent by the charging station, the target vehicle detects the temperature of the battery based on the temperature acquisition message, generates battery temperature information based on the detection result, and sends the battery temperature information to the charging station.

In some other embodiments, in the case where the target vehicle determines that the thermal management over the battery is to be performed by the charging station, the target vehicle sends the battery temperature information of the battery to the charging station.

In some embodiments, the target vehicle continuously sends battery temperature information of the battery of the vehicle to the charging station at a predetermined frequency.

In some embodiments, the target vehicle detects the temperature of the battery by invoking a temperature sensor.

Optionally, the battery temperature includes at least one of: a cell temperature, a battery module temperature, a battery pack temperature, a battery surface temperature, a connection point temperature, a battery ambient temperature, and a system coolant temperature.

The cell temperature is used to indicate the temperature of a single battery cell and/or battery unit inside the battery; in the case where the battery is a battery module composed of a plurality of battery cells, the temperature of the battery module is used to indicate the average temperature of the entire module and/or the temperature at a specific location within the module; the battery pack temperature is used to indicate the average temperature of the entire battery system; the battery surface temperature is used to indicate the temperature of a housing or a surface of the battery; the connection point temperature is used to indicate the temperature of a connection point between battery cells inside the battery and/or a connection point between a battery cell and an external circuit; the temperature of the battery ambient is used to indicate the external environmental temperature where the battery is arranged; and the system coolant temperature is used to indicate the temperature of a coolant in the battery system.

In step 350: in response to the battery temperature information indicating that the battery has a cooling demand, the charging connector is controlled to supply a coolant to the battery to cool the battery.

Exemplarily, the charging station determines whether the battery has a cooling demand based on the battery temperature information. In a case where the battery has a cooling demand, the charging station controls the charging connector to supply the coolant to the battery to cool the battery.

Optionally, the determination on the cooling demand may be implemented as at least one of the following methods.

According to a first method, it is determined whether the battery has a cooling demand based on a predetermined temperature threshold.

Exemplarily, in the case where the battery temperature information reaches the predetermined temperature threshold, it is determined that the battery has a cooling demand. The charging connector is then controlled to supply the coolant to the battery to cool the battery.

In some embodiments, the predetermined temperature threshold may be a predetermined fixed value; and in some other embodiments, the predetermined temperature threshold may be customized by the user via the on-board terminal and/or the charging station, which is not limited in the present disclosure.

In some embodiments, in the case where the battery temperature information reaches the predetermined temperature threshold, the temperature of the battery is continuously detected. In the case where it is determined that a duration in which the battery temperature is higher than the predetermined temperature threshold reaches a predetermined duration, it is determined that the battery has a cooling demand. The charging connector is then controlled to supply the coolant to the battery to cool the battery.

According to a second method, it is determined whether the battery has a cooling demand based on a variation condition of battery temperature.

In some embodiments, the battery temperature information represents the temperature variation of the battery over a predetermined time period. Exemplarily, in the case where the battery temperature information indicates a continuous increase in the battery temperature, it is determined that the battery has a cooling demand. The charging connector is then controlled to supply the coolant to the battery to cool the battery.

Optionally, the duration of the predetermined time period may be a predetermined fixed value; alternatively, the duration of the predetermined time period may be customized by the user via the on-board terminal and/or the charging station, which is not limited in the present disclosure.

In some embodiments, the process of determining the cooling demand of the battery is performed locally at the charging station, that is, the charging station determines whether the battery has a cooling demand based on battery temperature information.

In some other embodiments, in the case where the charging station and the target vehicle establish a connection therebetween via a cloud server, the process of determining the cooling demand of the battery is performed at the cloud server. Exemplarily, the target vehicle sends the battery temperature information of the battery to the cloud server, and the cloud server determines whether the battery has a cooling demand based on the battery temperature. In the case where the cloud server determines that the battery has a cooling demand, it sends a battery cooling instruction to the charging station. This battery cooling instruction is used to control the charging station to cool the battery. Upon receiving the battery cooling instruction, the charging station controls the charging connector to supply the coolant to the battery based on the battery cooling instruction, thereby cooling the battery. In the case where the cloud server determines that the battery currently does not have a cooling demand, it keeps receiving the battery temperature information from the target vehicle, so that local data processing and a storage space of the charging station is not occupied in the case where the cooling demand does not exist.

In step 360: the state of the battery is detected.

In some embodiments of the present disclosure, during the process of supplying the coolant to the target vehicle from the charging station to cool the battery, the charging station continuously detects the state of the battery.

In some embodiments, the charging station sends a state acquisition request for the state to the target vehicle. Upon receiving the state acquisition information, the target vehicle detects the state of the battery of the vehicle and feeds back the obtained state information to the charging station, so that the charging station can acquire the state of the battery of the vehicle.

Optionally, the state of the battery includes at least one of the following states.

The first type is a State of Charge (SOC).

Exemplarily, the SOC is used to indicate the amount of electricity stored in the battery. In some embodiments, the state of charge of the battery is determined by a ratio of the remaining battery charge to the rated capacity of the battery, for example, SOC100%, or SOC50%.

The second type is a temperature state.

Optionally, the battery temperature includes at least one of: a cell temperature, a battery module temperature, a battery pack temperature, a battery surface temperature, a connection point temperature, a battery ambient temperature, and a system coolant temperature.

The third type is a charging and discharging state.

Exemplarily, the charging and discharging state indicates whether the battery is in a charging state or a discharging state, where the discharging state is used to indicate the state where the charging process of the battery is stopped.

In step 370: in response to the state satisfying a specified state requirement, an unlock instruction is sent to the target vehicle.

In some embodiments of the present disclosure, the unlock instruction mentioned above is used to indicate the release of the thermal management over the target vehicle.

Optionally, the specified state requirement may be implemented as at least one of the following methods.

The first method is that, in the case where the state is the power state, an unlock instruction is sent to the target vehicle when the state indicates that the battery is fully charged.

That is, in the case where the battery SOC reaches 100%, the charging station sends an unlock instruction to the target vehicle. In an example, after receiving the unlock instruction, the BMS of the target vehicle is disconnected from the cooling system of the charging station, and the charging station stops supplying the coolant to the target vehicle.

The second method is that, in the case where the state is in the temperature state, an unlock instruction is sent to the target vehicle when the state indicates that the temperature of the battery of the vehicle satisfies a thermal management strategy for the target vehicle.

In some embodiments, the target vehicle is provided with a vehicle thermal management strategy, which is used to indicate a processing condition for the thermal management of the battery.

In an example, the vehicle thermal management strategy includes: level 1 cooling, where Negative Temperature Coefficient (NTC) Tmax ≥ X °C, an inlet water temperature X °C, a flow rate is X L/min; level 2 cooling, where NTC Tmax ≥ X °C, the inlet water temperature is X °C, the flow rate is X L/min; level 3 cooling, where NTC Tmax ≥ X °C, the inlet water temperature is X °C, the flow rate is X L/min; and in a case where NTC Tmax ≤ X°C, the cooling function is disabled.

In some embodiments, after the target vehicle disables its vehicle thermal management function, the thermal management strategy for the target vehicle is sent to the charging station, and the charging station controls the supplying of coolant based on the state and the vehicle thermal management strategy.

Exemplarily, in the case where the temperature of the battery satisfies a cooling disable condition indicated by the vehicle thermal management strategy, an unlock instruction is sent to the target vehicle. Upon receiving the unlock instruction, the BMS disconnects the cooling system from the charging station, and the charging station stops supplying the coolant to the target vehicle.

The third method is that, in the case where the state is the charging or discharging state, and a disconnection from the battery is detected, an unlock instruction is sent to the target vehicle.

In some embodiments, in the case where the charging process of the battery is terminated halfway, the charging station sends an unlock instruction to the target vehicle. Upon receiving the unlock instruction, the BMS is disconnected from the cooling system of the charging station, and the charging station stops supplying the coolant to the target vehicle.

In some embodiments, the charging station is provided with a charging stop button. In the case where the charging station detects that the charging stop button receives a triggering operation, the charging connection between the charging station and the battery is cut off and an unlock instruction is sent to the target vehicle.

In some other embodiments, in the case where the charging station detects that the charging connector is disconnected from the target vehicle, the charging station sends an unlock instruction to the target vehicle.

In some embodiments, after receiving the unlock instruction, the target vehicle detects the temperature of the battery and enables the vehicle thermal management function based on the detected battery temperature. In an example, after receiving the unlock instruction, the BMS determines whether to enable the vehicle thermal management function based on a cell temperature of the battery.

In summary, during the charging process of a target vehicle via a charging station, the charging station controls the target vehicle to disable the thermal management function of the target vehicle, thereby taking over the thermal management of the target vehicle during the charging process. During the thermal management of the target vehicle, in the case where the temperature of the battery of the target vehicle indicates that the battery has a cooling demand, the charging station controls the charging connector to supply the coolant to the battery, thereby cooling the battery during the charging process. In this way, a dynamic control of supplying the coolant to the battery based on the battery temperature via highly integrated functional modules can be achieved, thereby adaptively improving the cooling effect on the battery during the charging process, and reducing the impact of heat generated during the charging process on the service life of the battery. Meanwhile, since the generation of thermal energy during the charging process is reduced, the method can further contribute to energy conservation and emission reduction.

In the embodiments of the present disclosure, the charging station takes over the thermal management of the target vehicle only after the permission of the charging station over the target vehicle is confirmed, which can ensure precise control of the thermal management performed by the charging station over the target vehicle, thereby improving the effectiveness of the takeover by the charging station on the thermal management, and avoiding causing unknown damage to the target vehicle in the case of lacking the permission.

In some embodiments of the present disclosure, in the case where the charging station confirms that it has the permission for the thermal management of the target vehicle, the thermal management function of the vehicle by its own is disabled, so that the charging station takes over the thermal management of the target vehicle, thereby avoiding an instruction conflict that may occur in the case where multiple functional systems operate simultaneously, and ensuring uniformity in the thermal management of the battery.

In the embodiments of the present disclosure, the charging station achieves automatic unlocking of the thermal management by detecting the matching between the state of the battery and the specified state requirement, so that the thermal management of the target vehicle by the charging station can be more intelligent, and user operation requirements can be reduced, thereby improving the intelligence of the charging system.

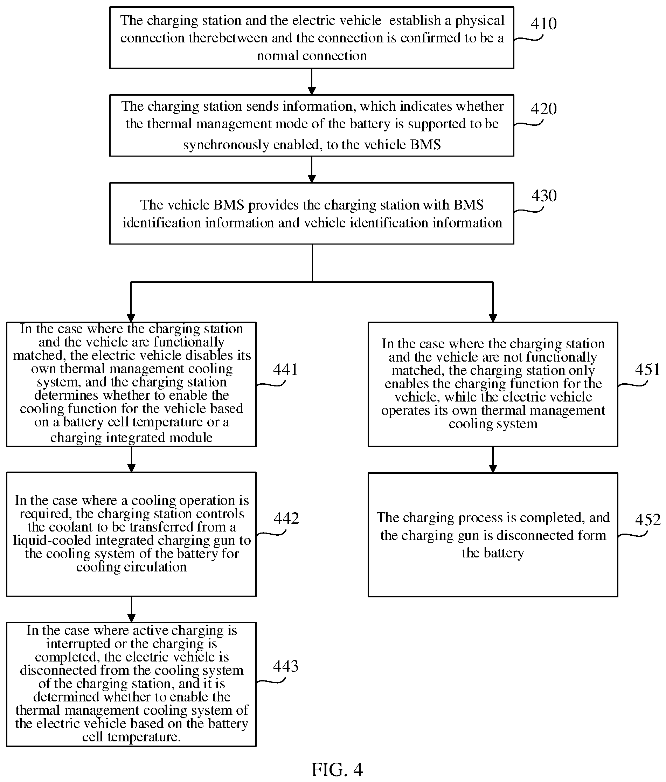

With reference to FIG. 4, which illustrates a flowchart of charging and cooling processes performed by a charging station on the vehicle according to some embodiments of the present disclosure. The process includes the following steps.

In step 410: the charging station and the electric vehicle establish a physical connection therebetween and the connection is confirmed to be a normal connection.

Here, the physical connection refers to a hardware connection between the charging station and the electric vehicle, that is, the charging plug of the electric vehicle is inserted into the socket of the charging station, or the charging connector of the charging station is inserted into the charging port of the electric vehicle.

In step 420: the charging station sends information, which indicates whether the thermal management mode of the battery is supported to be synchronously enabled, to the vehicle BMS.

In some embodiments, the charging station sends a permission confirmation request to the vehicle BMS, the permission confirmation request is used to request confirmation of a thermal management permission of the charging station over the electric vehicle.

Optionally, the permission confirmation request is transmitted via a communication network between the charging station and the target vehicle. Optionally, the communication network may be implemented as a wired network, or alternatively, may be implemented as a wireless network.

Optionally, a data transmission line is provided in a charging cable of the charging station, and the charging station sends the permission confirmation request to the electric vehicle via the data transmission line.

In step 430: the vehicle BMS provides the charging station with BMS identification information and vehicle identification information.

In some embodiments, the BMS of the electric vehicle processes the received permission confirmation request and feeds back a request confirmation message corresponding to the permission confirmation request to the charging station. Here, the request confirmation message is a message fed back by the electric vehicle in response to confirming that the vehicle supports the thermal management performed by the charging station over the battery.

Exemplarily, the aforementioned request confirmation message includes the BMS identification information of the electric vehicle and the vehicle identification information of the electric vehicle. The BMS identification information includes parameters and data that are used to uniquely identify and manage the BMS, such as a BMS ID. The vehicle identification information is used to indicate information that can uniquely identify the target vehicle, such as a Vehicle Identification Number (VIN), a license plate number, and an on-board terminal ID.

In step 441, in the case where the charging station and the vehicle are functionally matched, the electric vehicle disables its own thermal management cooling system, and the charging station determines whether to enable the cooling function for the vehicle based on a battery cell temperature or a charging integrated module.

In some embodiments, the charging station can determine whether the battery of the electric vehicle supports the fast-charging mode through the BMS identification information and the vehicle identification information that are provided by the vehicle BMS. In the case where the battery of the electric vehicle supports the fast-charging mode, it indicates that the charging station has the permission to perform thermal management on the battery.

In some embodiments, in the case where the charging station confirms that it has the permission to perform thermal management on the battery, the charging station sends a thermal management disable request to the electric vehicle. The thermal management disable request is used to request the electric vehicle to disable the thermal management function of the vehicle. After the electric vehicle receives a thermal management disable request sent by the charging station, the electric vehicle detects the state of the vehicle thermal management function. In response to detecting that the vehicle thermal management function is enabled, the electric vehicle disables the vehicle thermal management function based on the thermal management disable request and sends a disable confirmation message to the charging station. In response to detecting that the vehicle thermal management function is disabled, the electric vehicle directly sends a disable confirmation message to the charging station.

In some embodiments, the charging station acquires the cell temperature of the battery of the electric vehicle to determine whether to enable the cooling function for the vehicle. Alternatively, the charging station acquires the state of the charging integrated module of the electric vehicle to determine whether the vehicle battery is fully charged, thereby determining whether to enable the cooling function for the vehicle.

In step 442: in the case where a cooling operation is required, the charging station controls the coolant to be transferred from a liquid-cooled integrated charging connector to the cooling system of the battery for cooling circulation.

Optionally, in the case where the temperature of the battery cells reaches a predetermined temperature threshold, it is determined that a cooling operation is required; alternatively, in the case where the state of the charging integrated module indicates that the battery is in a charging process, it is determined that the cooling operation is required.

Exemplarily, the charging station controls the charging connector to supply the coolant to the cooling system of the battery, and controls the coolant via the cooling system to cool the battery. Here, the cooling system of the battery is a system used in the electric vehicle for cooling the battery. In some embodiments of the present disclosure, the cooling system is a water-cooled cooling system, that is, a cooling system controlling the flow of the coolant in a conduit inside the battery to transfer the heat generated by the battery during the charging process to the coolant, thereby causing the temperature of the battery to decrease.

In step 443: in the case where an active charging is interrupted or the charging is completed, the electric vehicle is disconnected from the cooling system of the charging station, and it is determined whether to enable the thermal management cooling system of the electric vehicle based on the battery cell temperature.

Exemplarily, in the case where the physical connection between the charging station and the electric vehicle is cut off, it is determined that the active charging is interrupted; and in the case where the charging station detects that the battery of the electric vehicle is fully charged, it is determined that the charging is completed.

After the electric vehicle is disconnected from the cooling system of the charging station, the electric vehicle detects the temperature of the battery and determines whether to enable the thermal management function of the vehicle based on the detected battery temperature. In an example, after receiving an unlock instruction, the BMS determines whether to enable the thermal management system based on the cell temperature of the battery.

In step 451: in the case where the charging station and the vehicle are not functionally matched, the charging station only enables the charging function for the vehicle, while the electric vehicle operates its own thermal management cooling system.

In some embodiments, in the case where the charging station provides the BMS identification information and the vehicle identification information to the charging station via the vehicle BMS, and determines that the battery of the electric vehicle does not support the fast-charging mode, it indicates that the charging station does not have the permission to perform thermal management over the battery of the vehicle. In this case, the charging station is only used for charging the battery, and the electric vehicle operates its own thermal management cooling system.

In step 452: the charging is completed, and the charging connector is disconnected form the battery.

Alternatively, the physical connection between the charging station and the electric vehicle may be actively cut off, or may be automatically cut off in the case where it is determined that the battery of the electric vehicle is fully charged, thereby completing the charging.

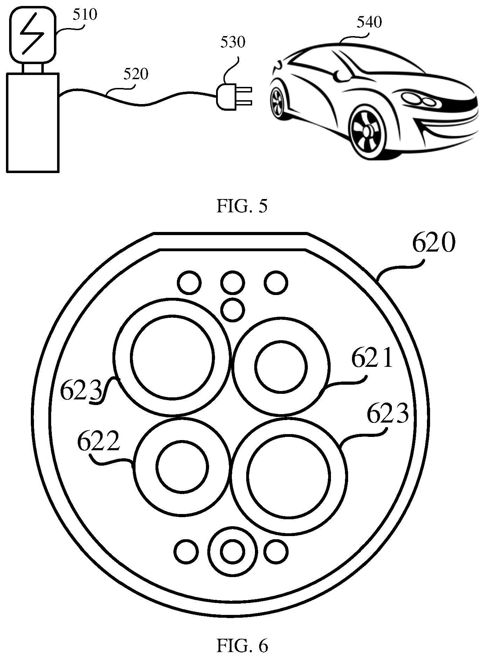

With reference to FIG. 5, which illustrates a schematic diagram of a cooling loop according to some embodiments of the present disclosure. The cooling loop includes a charging station 510, a charging cable 520, a charging connector 530, and a target vehicle 540.

The charging station 510 is connected to the target vehicle 540 via the charging cable 520 and the charging connector 530.

In the fast-charging mode, the heat transfer path of the charging circuit is as follows: charging station 510 → charging cable 520 → charging connector 530 → charging socket of target vehicle 540 → charging interface of battery → battery high-voltage contactor → interior of battery pack → surface of battery cell.

In some embodiments of the present disclosure, a coolant conduit is arranged in the charging cable 520 and the charging connector 530, via which the coolant is supplied to the target vehicle 540.

In some embodiments, the coolant conduit includes an inlet conduit and an outlet conduit. The inlet conduit is used to supply the coolant to the battery, and the outlet conduit is used to return the coolant to the charging station, so as to form a loop. Exemplarily, the inlet conduit is arranged at a first position in the charging cable, and the outlet conduit is arranged at a second position in the charging cable, where the first and second positions may be configured according to different heat dissipation requirements of the charging cable 520.

Optionally, the number of inlet conduits and the number of outlet conduits may be the same or different, which is not limited in the present disclosure.

In some embodiments, in the case where the number of the inlet conduits and the number of the outlet conduits are the same, the inlet conduits and outlet conduits are both arranged around a current-carrying conduit in the charging cable. In some other embodiments, in the case where the number of the inlet conduits and the number of the outlet conduits are different from each other, the inlet conduits are arranged around the current-carrying conduit in the charging cable, and the outlet conduits are arranged at positions away from the current-carrying conduit. That is, the distance between the first position and the current-carrying conduit is greater than the distance between the second position and the current-carrying conduit. In an example, the number of the inlet conduits is greater than the number of the outlet conduits, or the number of the inlet conduits is less than the number of the outlet conduits.

In some embodiments, the charging station 510 further includes a cooling unit, which includes a water tank, a water pump, a radiator, and a fan. The water pump drives the coolant to circulate via the charging cable 520 and the cooling system of the battery, and the heat is transferred to the radiator and is then dissipated via the fan, thereby achieving a great current-carrying capacity than that of a conventional naturally cooled charging connector 530 and reducing the energy consumption of the vehicle. In this way, the integration and unification of the charging station 510 and the thermal management system of the vehicle can be realized, and energy saving and emission reduction can also be effectively achieved.

In some embodiments, as shown in FIG. 6, which illustrates a schematic cross-sectional view of a charging cable 620 according to some embodiments of the present disclosure, the charging cable 620 includes one liquid inlet conduit 621 and one liquid outlet conduit 622. The first position where the liquid inlet conduit 621 is arranged and the second position where the liquid outlet conduit 622 is arranged are adjacent to the current-carrying conduit 623 in the charging cable 620. That is, a one-inlet and one-outlet configuration is adopted to form a coolant loop.

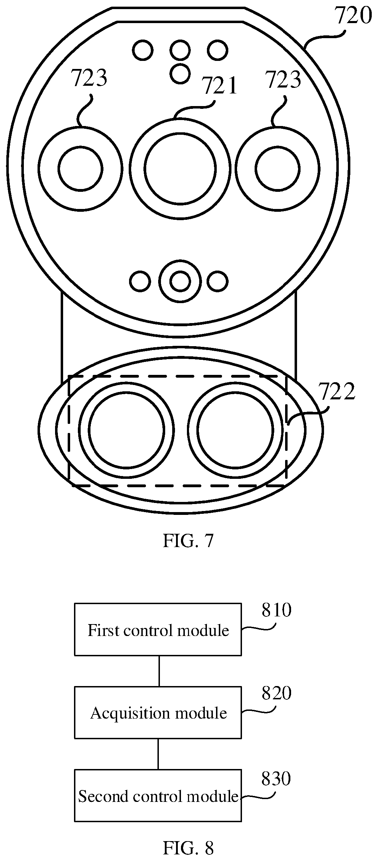

In some other embodiments, as shown in FIG. 7, which illustrates a schematic cross-sectional view of a charging cable 720 according to some embodiments of the present disclosure, the charging cable 720 includes one liquid inlet conduit 721 and two liquid outlet conduits 722. The first position where the liquid inlet conduit 721 is located is between the current-carrying conduits 723, and the two liquid outlet conduits 722 are arranged away from the current-carrying conduits 723. This layout can address the situation where the charging harness corresponding to the current-carrying conduits 723 generates excessive heat during a fast-charging process, and the resulting high temperature causes an excessive rise in the coolant temperature. That is, a one-inlet and two-outlet configuration is adopted, where one outlet is arranged adjacent to the charging conduit to cool it, and the other outlet delivers the coolant in a thermally insulted manner to cool the battery module and the charging module. This configuration can reduce the impact of the coolant that has absorbed heat and is conveyed by the liquid outlet conduits 722 on the liquid inlet conduit 721 and current-carrying conduits 723, thereby improving the cooling efficiency of the coolant output by the charging station.

It should be noted that before and during the collection of relevant user data in the present disclosure, a prompting interface, pop-up window, or voice prompting information can be displayed. These prompting interfaces, pop-up windows, or voice prompts are used to inform the user that their relevant data is being collected. The present disclosure only proceeds with the steps to obtain the user's relevant data after receiving a confirmation operation from the user on the prompting interface or pop-up window. Otherwise (i.e., in the case where no confirmation operation from the user on the prompting interface or pop-up window is received), the steps to obtain the user's relevant data are ended, meaning the user's relevant data is not obtained. In other words, all user data collected by the present disclosure is obtained with the user's consent and authorization, and the collection, use, and processing of relevant user data must comply with relevant laws, regulations, and standards of relevant countries and regions.

With reference to FIG. 8, which illustrates a block diagram of a structure of a thermal management apparatus for a vehicle during a charging process, according to some embodiments of the present disclosure. The apparatus includes a first control module 810, an acquisition module 820, and a second control module 830.

The first control module 810 is configured to control a target vehicle to disable a vehicle thermal management function in a case where a charging connector of a charging station is connected to the target vehicle, where the vehicle thermal management function is a functional mode in which the target vehicle performs thermal management over the target vehicle;

The acquisition module 820 is configured to acquire battery temperature information of a battery of the target vehicle.

The second control module 830 is configured to: control, in response to the battery temperature information indicating that the battery has a cooling demand, the charging connector to supply a coolant to the battery to cool the battery.

In some optional embodiments, the second control module 830 is further configured to control the charging connector to supply the coolant to the battery to cool the battery in response to the battery temperature information reaching a predetermined temperature threshold.

In some optional embodiments, the second control module 830 is further configured to determine flow rate control information matching the battery temperature information in response to the battery temperature information reaching the predetermined temperature threshold, where the flow rate control information is used to control a flow rate of the coolant; and control the charging connector to supply the coolant to the battery based on the flow rate control information, so as to cool the battery.

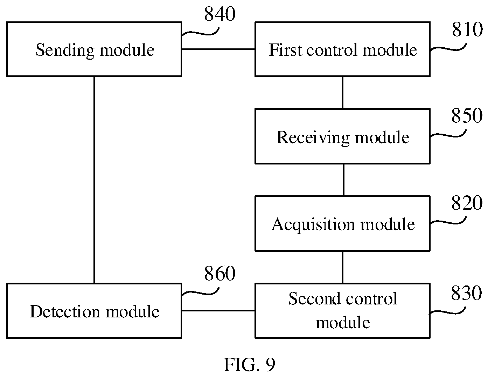

In some optional embodiments, as shown in FIG. 9, the apparatus further includes a sending module 840.

The sending module 840 is configured to send a permission confirmation request to the target vehicle in response to detecting that the charging connector is connected to the target vehicle, where the permission confirmation request is used to request confirmation of the thermal management permission of the charging station over the target vehicle;

The first control module 810 is futher configured to control the target vehicle to disable the vehicle thermal management function in response to receiving a request confirmation message responding to the permission confirmation request from the target vehicle. The request confirmation message is a message fed back by the target vehicle in response to confirming that the target vehicle supports the thermal management performed by the charging station over the battery.

In some optional embodiments, the sending module 840 is further configured to send a thermal management disable request to the target vehicle, where the thermal management disable request is used to request the target vehicle to disable the vehicle thermal management function.

The apparatus further includes a receiving module 850.

The receiving module 850 is configured to receive the disable confirmation message from the target vehicle, where the disable confirmation message is used to indicate that the vehicle disables the thermal management function.

In some optional embodiments, the apparatus further includes a detection module 860.

The detection module 860 is configured to detect a state of the battery.

The sending module 840 is further configured to send an unlock instruction to the target vehicle in response to the state satisfies a specified state requirement, where the unlock instruction is used to instruct release of the thermal management over the target vehicle, and the target vehicle is configured to: detect a temperature of the battery in response to receiving the unlock instruction, and enable the vehicle thermal management function based on the detected temperature.

In some optional embodiments, the sending module 840 is further configured to send the unlock instruction to the target vehicle in response to the state indicating that the battery is in a fully charged state; or send the unlock instruction to the target vehicle in response to the state indicating that the temperature of the battery satisfies a thermal management strategy for the target vehicle; or send the unlock instruction to the target vehicle in response to detecting disconnection from the battery.

In some optional embodiments, the charging station is connected to the target vehicle via a charging cable and a charging connector, coolant conduits are arranged in the charging cable and the charging connector, and the coolant is configured to be supplied to the target vehicle via the coolant conduits.

The coolant conduit includes an inlet conduit and an outlet conduit. The inlet conduit is configured to supply the coolant to the battery, and the outlet conduit is configured to return the coolant to the charging station, so as to form a loop.

The inlet conduit is arranged at a first position in the charging cable, and the outlet conduit is arranged at a second position in the charging cable.

In a case where the charging cable includes one inlet conduit and one outlet conduit, the first position and the second position are adjacent to a current-carrying conduit in the charging cable; and in the case where the charging cable includes one inlet conduit and a plurality of outlet conduits, a distance between the first position and the current-carrying conduit is greater than a distance between the second position and the current-carrying conduit.

It should be noted that the thermal management apparatus for the vehicle during the charging process provided in the aforementioned embodiments is merely exemplified based on the division of the aforementioned functional modules. In practical applications, the aforementioned functions may be allocated to different functional modules as desired, that is, the internal structure of the apparatus may be divided into different functional modules to realize all or part of the functions described above. Additionally, the thermal management apparatus for the vehicle during the charging process provided in the aforementioned embodiments and the thermal management method for the vehicle during the charging process provided in the embodiments belong to the same concept. The specific implementation process is detailed in the method embodiment and will not be repeated here.

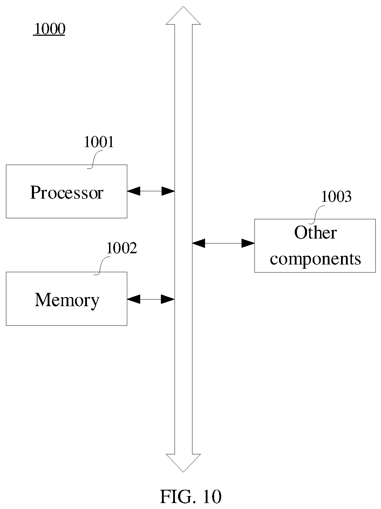

FIG. 10 illustrates a block diagram of a structure of a charging station 1000 according to some embodiments of the present disclosure. A processing module in the charging station 1000 includes a processor 1001 and a memory 1002.

The processor 1001 may include one or more processing cores, such as a 4-core processor, an 8-core processor, etc. The processor 1001 may be implemented using at least one hardware form from digital signal processing (DSP), field-programmable gate array (FPGA), or programmable logic array (PLA). The processor 1001 may further include a main processor and a co-processor. The main processor is a processor used for processing data in the awake state, also known as the central processing unit (CPU). The co-processor is a low-power processor used for processing data in the standby state. In some embodiments, the processor 1001 may be integrated with a graphics processing unit (GPU), which is responsible for rendering and drawing the content required to be displayed on the display screen. In some embodiments, the processor 1001 may further include an artificial intelligence (AI) processor, which is used for handling computational operations related to machine learning.

The memory 1002 may include one or more computer-readable storage media, which may be non-transitory. The memory 1002 may further include a high-speed random-access memory, as well as a non-volatile memory, such as one or more magnetic disk storage devices, flash memory storage devices. In some embodiments, the non-transitory computer-readable storage media in the memory 1002 are used to store at least one instruction for, which when run by the processor 1001, cause to implement the thermal management method for the vehicle during the charging process provided in the method embodiments of the present disclosure.

Exemplarily, the charging station 1000 further includes other components 1003. Those skilled in the art can understand that the structure shown in FIG. 9 does not constitute a limitation on the charging station 1000, and the charging station 1000 may include more or fewer components than shown in the figure, or combine certain components, or adopt different component arrangements.

Those skilled in the art can understand that all or part of the steps in the various methods of the above embodiments can be instructed to the relevant hardware through a program. The program may be stored in a computer-readable storage medium, which may be the computer-readable storage medium contained in the memory of the above embodiments, or it may exist separately and not be assembled into a terminal. The computer-readable storage medium stores at least one instruction, at least one program, a code set, or an instruction set, which is loaded and run by the processor to perform the thermal management method for the vehicle during the charging process in any of the above embodiments.

Optionally, the computer-readable storage medium may include: a read-only memory (ROM), a random-access memory (RAM), a solid state drives (SSD), or an optical disc, etc. Here, the random-access memory may include a resistance random-access memory (ReRAM) and a dynamic random-access memory (DRAM). The serial numbers of the embodiments of the present disclosure mentioned above are merely for description and do not indicate the superiority or inferiority of the embodiments.

Those skilled in the art can understand that all or part of the steps for implementing the above embodiments can be accomplished through hardware, or can be instructed to relevant hardware through a program. The program can be stored in a computer-readable storage medium, and the aforementioned storage medium can be a read-only memory, a magnetic disk, an optical disk, or the like.

Described above are merely optional embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A thermal management method for a vehicle during a charging process, performed by a charging station, the method comprising:
controlling, in response to a charging connector of the charging station being connected to a target vehicle, the target vehicle to disable a vehicle thermal management function, wherein the vehicle thermal management function is a functional mode in which the target vehicle performs thermal management over the target vehicle;
obtaining battery temperature information of a battery of the target vehicle; and
controlling, in response to the battery temperature information indicating that the battery has a cooling demand, the charging connector to supply a coolant to the battery to cool the battery.

2. The method according to claim 1, wherein controlling, in response to the battery temperature information indicating that the battery has the cooling demand, the charging connector to supply the coolant to the battery to cool the battery comprises:
controlling, in response to the battery temperature information reaching a predetermined temperature threshold, the charging connector to supply the coolant to the battery to cool the battery.

3. The method according to claim 2, wherein controlling, in response to the battery temperature information reaching the predetermined temperature threshold, the charging connector to supply the coolant to the battery to cool the battery comprises:
determining, in response to the battery temperature information reaching the predetermined temperature, flow rate control information matching the battery temperature information, wherein the flow rate control information is used to control a flow rate of the coolant; and
controlling, based on the flow rate control information, the charging connector to supply the coolant to the battery to cool the battery.

4. The method according to any one of claims 1 to 3, wherein controlling, in response to the charging connector of the charging station being connected to the target vehicle, the target vehicle to disable the vehicle thermal management function comprises:
sending, in response to detecting that the charging connector being connected to the target vehicle, a permission confirmation request to the target vehicle, wherein the permission confirmation request is used to request confirmation of a thermal management permission of the charging station over the target vehicle; and
controlling, in response to receiving a request confirmation message responding to the permission confirmation request from the target vehicle, the target vehicle to disable the vehicle thermal management function, wherein the request confirmation message is a message fed back by the target vehicle in response to confirming that the target vehicle supports the thermal management performed by the charging station over the battery.

5. The method according to claim 4, wherein controlling the target vehicle to disable the vehicle thermal management function comprises:
sending a thermal management disable request to the target vehicle, wherein the thermal management disable request is used to request the target vehicle to disable the vehicle thermal management function; and
receiving the disable confirmation message from the target vehicle, wherein the disable confirmation message is used to indicate that the vehicle disables the thermal management function.

6. The method according to any one of claims 1 to 3, wherein subsequent to controlling, in response to the battery temperature information indicating that the battery has the cooling demand, the charging connector to supply the coolant to the battery to cool the battery, the method further comprises:
detecting a state of the battery; and
sending, in response to the state satisfying a specified state requirement, an unlock instruction to the target vehicle, wherein the unlock instruction is used to instruct release of the thermal management over the target vehicle, and the target vehicle is configured to detect a temperature of the battery in response to receiving the unlock instruction, and enable the vehicle thermal management function based on the detected temperature.

7. The method according to claim 6, wherein sending, in response to the state satisfying the specified state requirement, the unlock instruction to the target vehicle comprises:
sending, in response to the state indicating that the battery is in a fully charged state, the unlock instruction to the target vehicle; or
sending, in response to the state indicating that the temperature of the battery satisfies a thermal management strategy for the target vehicle, the unlock instruction to the target vehicle; or
sending, in response to detecting disconnection from the battery, the unlock instruction to the target vehicle.

8. The method according to any one of claims 1 to 3, wherein the charging station is connected to the target vehicle via a charging cable and the charging connector, coolant conduits are arranged in the charging cable and the charging connector, and the coolant is configured to be supplied to the target vehicle via the coolant conduits;
the coolant conduits comprise an inlet conduit and an outlet conduit, wherein the inlet conduit is configured to supply the coolant to the battery, and the outlet conduit is configured to return the coolant to the charging station, so as to form a loop;
the inlet conduit is arranged at a first position in the charging cable, and the outlet conduit is arranged at a second position in the charging cable; and
in a case where the charging cable comprises one inlet conduit and one outlet conduit, the first position and the second position are adjacent to a current-carrying conduit in the charging cable; or in a case where the charging cable comprises one inlet conduit and a plurality of outlet conduits, a distance between the first position and the current-carrying conduit is greater than a distance between the second position and the current-carrying conduit.

9. A thermal management apparatus for a vehicle during a charging process, comprising:
a first control module, configured to control, in response to a charging connector of the charging station being connected to a target vehicle, a target vehicle to disable a vehicle thermal management function, wherein the vehicle thermal management function is a functional mode in which the target vehicle performs thermal management over the target vehicle;
an acquisition module configured to: acquire battery temperature information of a battery of the target vehicle; and
a second control module, configured to control, in response to the battery temperature information indicating that the battery has a cooling demand, the charging connector to supply a coolant to the battery to cool the battery.

10. A charging station, comprising a charging connector, a processor, and a memory storing at least one program, wherein the processor, when loading and running the at least one program, is caused to perform the thermal management method as defined in any one of claims 1 to 8.
